# EUROPEAN PATENT SPECIFICATION

(11) **EP 3 309 755 B1**
(45) Date of publication and mention of the grant of the patent: **09.12.2020**
(21) Application number: 17195857.2
(22) Date of filing: 11.10.2017
(51) Int. Cl.: G07C 9/00, B60R 25/25

(54) **BIOMETRIC-ELECTRONIC KEY SYSTEM**
BIOMETRISCHES ELEKTRONISCHES SCHLÜSSELSYSTEM
SYSTÈME DE CLÉ BIOMÉTRIQUE-ÉLECTRONIQUE

(30) Priority: 14.10.2016 JP 2016202537
(43) Date of publication of application: 18.04.2018
(73) Proprietor: KABUSHIKI KAISHA TOKAI RIKA DENKI SEISAKUSHO, Niwa-gun, Aichi 480-0195 (JP)
(72) Inventor: KAWAMURA, Daisuke, Niwa-gun, Aichi 480-0195 (JP); ARAKAWA, Masahiro, Niwa-gun, Aichi 480-0195 (JP); ARAKAWA, Kazunori, Niwa-gun, Aichi 480-0195 (JP)
(74) Representative: TBK

(56) References cited:
- EP-A1- 2 767 446
- EP-A2- 2 251 838
- WO-A1-2014/157831
- WO-A2-03/044630
- CN-A- 105 313 835
- JP-A- 2009 127 244
- JP-A- 2013 216 227
- US-A1- 2014 039 721
- US-A1- 2014 282 931
- US-A1- 2015 269 797

## Description

The present invention relates to a biometric-electronic key system that authenticates a user by combining biometric authentication and key verification.

Japanese Laid-Open Patent Publication No. 2011-58334 describes an example of a known biometric-electronic key system for a vehicle that authenticates a true user by performing a key verification to verify an electronic key and a biometric authentication to authenticate biometric information of the user. In this system, the vehicle cannot be operated unless the key verification and the biometric authentication are both accomplished. This provides high security against vehicle theft.

When actuation of a device is permitted under the condition that the key verification and the biometric authentication are both accomplished, if, for example, the biometric authentication cannot be accomplished, the user cannot determine whether it was the biometric authentication or the key verification that was not accomplished. Further, when biometric authentication cannot be accomplished, the actuation of the device cannot be performed or permitted.

**Further prior art is disclosed in** US 2014/282931 A1 **describing a system for vehicular biometric access and personalization,** WO 03/044630 A2 **concerned with monitoring unauthorized usage of a vehicle and detecting conditions of a driver and a vehicle that indicate operation of the vehicle is unauthorized and providing a response to the detected conditions,** EP 2 767 446 A1 **describing an electronic key registration method, and** US 2014/039721 A1 **concerned with user authentication and security.**

It is an object of the present invention to provide a biometric-electronic key system that allows for a determination that the biometric authentication has not been accomplished and allows for shifting to a state that performs or permits actuation of a device even when the biometric authentication cannot be accomplished.

**According to the present invention, this is achieved by a biometric-electronic key system as defined by the appended claims.**

A biometric-electronic key system includes an electronic key and a communication peer. The electronic key is configured to store an electronic key ID. The communication peer is capable of wirelessly communicating with the electronic key and performing a key verification that verifies the electronic key ID and a biometric authentication that authenticates biometric information of a user. The communication peer is configured to perform or permit actuation of a device that is incorporated in the communication peer when the key verification and the biometric authentication have both been accomplished. The biometric-electronic key system further includes a non-accomplishment notification unit configured to present the user with a non-accomplishment notification of the biometric authentication when the biometric authentication cannot be accomplished. The biometric-electronic key system further includes a key operation authentication unit configured to execute the authentication corresponding to an electronic key operation performed by the user in response to receipt of the non-accomplishment notification. The biometric-electronic key system further includes an actuation permission unit configured to permit the actuation of the device even if the biometric authentication cannot be accomplished as long as the authentication performed by the key operation authentication unit has been accomplished.

In this configuration, a biometric authentication non-accomplishment notification is presented to the user. This allows the user to know that the biometric authentication has not been accomplished. Even if the biometric authentication is not accomplished, the accomplishment of the key operation authentication corresponding to a predetermined operation of the electronic key performed by the user will satisfy the condition that performs or permits actuation of the device. Thus, even if the biometric authentication is not accomplished, the actuation of the device can be permitted or performed when the key operation authentication, which is alternative authentication, is accomplished.

The present invention allows for a determination that the biometric authentication has not been accomplished and allows for the shifting to a state that performs or permits actuation of the device even when the biometric authentication cannot be accomplished.

Other aspects and advantages of the embodiments will become apparent from the following description, taken in conjunction with the accompanying drawings, illustrating by way of example the principles of the invention.

It is to be understood that both the foregoing general description and the following detailed description are exemplary and explanatory and are not restrictive of the invention, as claimed.

The embodiments, together with objects and advantages thereof, may best be understood by reference to the following description of the presently preferred embodiments together with the accompanying drawings in which:
Fig. 1 is a diagram illustrating one embodiment of a biometric-electronic key system;
Fig. 2 is a diagram illustrating a radio wave area formed outside a vehicle when exterior smart communication is performed;
Fig. 3 is a diagram illustrating a radio wave area formed inside the vehicle when interior smart communication is performed;
Fig. 4 is a schematic diagram illustrating an operation of an engine switch by a user;
Fig. 5 is a diagram illustrating a non-accomplishment notification signal transmitted from a verification ECU to an electronic key; and
Figs. 6A to 6C are diagrams illustrating examples of various forms of authentication performed by the user with the electronic key during alternative authentication.

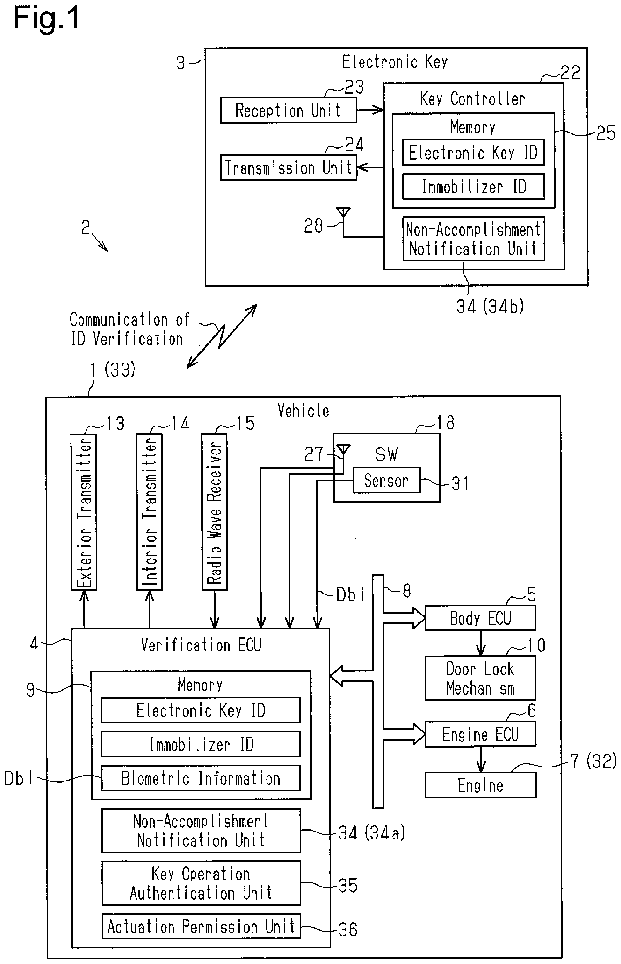

One embodiment of a biometric-electronic key system will now be described with reference to Figs. 1 to 6C.

As illustrated in Fig. 1, a vehicle 1 includes a biometric-electronic key system 2 that authenticates a user by combining key verification and biometric authentication. The biometric authentication verifies bodily-unique biometric information such as a fingerprint, voice, veins, or iris of a pupil of the user.

In key verification, an ID verification is performed through wireless communication with an electronic key 3, which is a vehicle key, to verify the electronic key 3. Examples of systems that perform such key verification include a key-operation-free system that performs the ID verification with the electronic key 3 through a narrowband wireless communication in response to communication from the vehicle 1 and an immobilizer system that performs the ID verification through a near-field wireless communication between the vehicle 1 and the electronic key 3. In the present example, the ID verification that uses the key-operation-free system is referred to as a "smart verification" and communication related to the smart verification is referred to as a "smart communication." The ID verification that uses the immobilizer system is referred to as an "immobilizer verification" and the communication related to the immobilizer verification is referred to as an "immobilizer communication." The immobilizer system can be used as an alternative verification system when, for example, battery drainage occurs in the electronic key 3 and the smart verification cannot be performed.

The vehicle 1 includes a verification electronic control unit (ECU) 4 that performs the ID verification, a body ECU 5 that manages the supply of power to the on-board electric devices, and an engine ECU 6 that controls an engine 7. The ECUs 4 to 6 are connected to one another by a communication line 8 in the vehicle 1. The verification ECU 4 includes a memory 9. An electronic key ID and an immobilizer ID of the electronic key 3 that are registered to the vehicle 1 are written and stored in the memory 9. The body ECU 5 controls actuation of a door lock mechanism 10, which is a mechanical part that locks and unlocks a vehicle door.

The vehicle 1 includes an exterior transmitter 13 that transmits radio waves out of a passenger compartment through the smart communication, an interior transmitter 14 that transmits radio waves in the passenger compartment through the smart communication, and a radio wave receiver 15 that receives the smart communication radio waves in the vehicle 1. The exterior transmitter 13 and the interior transmitter 14 transmit, for example, low frequency (LF) band radio waves. The radio wave receiver 15 receives, for example, ultrahigh frequency (UHF) band radio waves. In this manner, the smart communication of the present example is an LF-UHF bidirectional communication that combines an LF band and a UHF band in which the radio waves are transmitted from the vehicle 1 on the LF band and the radio waves are transmitted from the electronic key 3 on the UHF band over a longer distance than LF band radio waves.

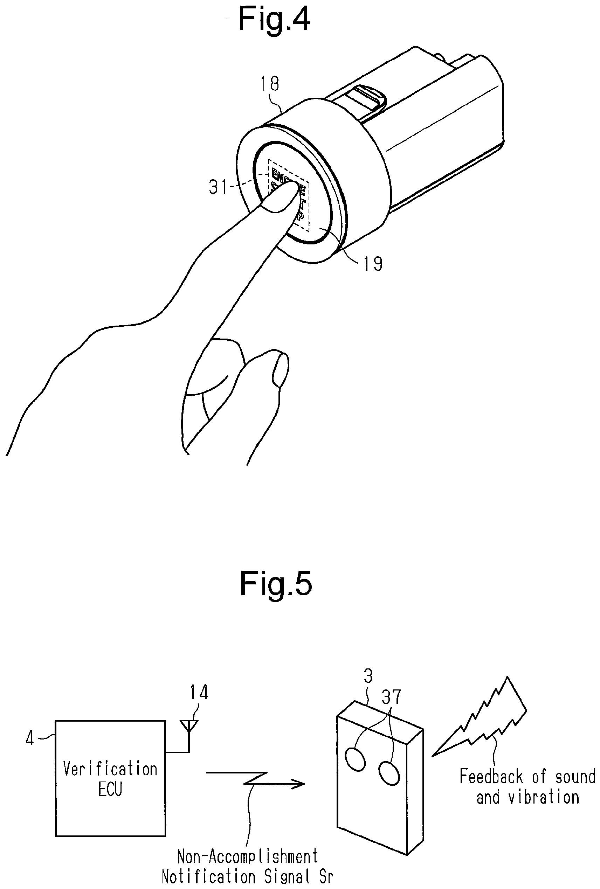

The vehicle 1 includes an engine switch 18 that is operated when switching on the vehicle power supply. In the present example, as illustrated in Fig. 4, the engine switch 18 includes a button 19 that is pressed when operated. The engine switch 18 is of a push momentary type in which the button 19 returns to its original position when the user releases the button 19. The engine switch 18 is operated to select one of IG-OFF, ACC-ON, IG-ON, and engine start states and shift the power.

The electronic key 3 includes a key controller 22 that controls actuation of the electronic key 3, a reception unit 23 that receives radio waves, and a transmission unit 24 that transmits radio waves. The key controller 22 includes a memory 25 that stores an electronic key ID, which is unique to the electronic key 3, and an immobilizer ID. In the present example, the reception unit 23 receives the LF radio waves, and the transmission unit 24 transmits the UHF radio waves.

The vehicle 1 includes an immobilizer antenna 27 that transmits and receives the radio waves to and from the electronic key 3 through the immobilizer communication. The immobilizer antenna 27 is formed from, for example, a coil antenna and incorporated in the engine switch 18. Further, the electronic key 3 includes an immobilizer antenna 28 that allows for the communication with the immobilizer antenna 27 of the vehicle 1. For example, a near-field wireless communication that is in compliance with the radio frequency identification (RFID) standard is used for the immobilizer communication. The communication area for the immobilizer communication is set to a range of several centimeters.

In the smart communication, the verification ECU 4 obtains an electronic key ID from the electronic key 3 through a wireless communication and executes a smart verification by verifying the electronic key ID. The smart verification includes an exterior smart verification that performs an ID verification with the electronic key 3 located outside the passenger compartment in response to the communication from the exterior transmitter 13 and the interior smart verification that performs the ID verification with the electronic key 3 located inside the passenger compartment in response to the communication from the interior transmitter 14. In the immobilizer communication, the verification ECU 4 obtains an immobilizer ID from the electronic key 3 through a wireless communication and executes the immobilizer verification by verifying the immobilizer ID.

The biometric-electronic key system 2 includes a sensor 31 that detects biometric information Dbi of the user. For example, the sensor 31 is used when the user enters the vehicle and performs an operation for starting the engine 7. In the present example, the sensor 31 is arranged on the button 19 of the engine switch 18. It is preferred that the sensor 31 be a fingerprint sensor.

The verification ECU 4 executes a biometric authentication by obtaining biometric information Dbi detected by the sensor 31 and comparing the obtained biometric information Dbi with biometric information Dbi that has been registered to the vehicle 1 in advance. In the vehicle 1, the biometric information Dbi is registered to, for example, the memory 9 of the verification ECU 4. When the verification ECU 4 determines that the smart verification and the biometric authentication have both been accomplished, the verification ECU 4 permits the power of the vehicle 1 to be shifted in accordance with the operation of the engine switch 18.

The biometric-electronic key system 2 has an alternative authentication function to permit the actuation of the device 32 (in the present example, starting of engine 7) when the biometric authentication cannot be accomplished although the key verification (in the present example, smart verification) performed between the electronic key 3 and a communication peer 33 (in the present example, vehicle 1) has been accomplished. For example, when lending the electronic key 3 to a person who has no biometric information Dbi registered to the vehicle 1, smart verification will be accomplished but biometric authentication will not be accomplished. Thus, the engine 7 of the vehicle 1 cannot be started. This is inconvenient. The above alternative authentication function can be used to cope with such a situation. In the present example, it is preferred that the determination of whether or not to permit a vehicle door to be locked and unlocked using the key verification such as the smart verification or the wireless verification.

The biometric-electronic key system 2 includes non-accomplishment notification units 34 that issue notifications indicating that the biometric authentication has not been accomplished when the biometric authentication cannot be accomplished. The non-accomplishment notification units 34 include a non-accomplishment notification unit 34a arranged in the vehicle 1 (verification ECU 4) and a non-accomplishment notification unit 34b arranged in the electronic key 3 (key controller 22). When the biometric authentication cannot be accomplished, the non-accomplishment notification units 34a and 34b cooperate with each other to notify the user through the electronic key 3 that the biometric authentication has not been accomplished.

The biometric-electronic key system 2 includes a key operation authentication unit 35 that executes the authentication (hereinafter referred to as key operation authentication) corresponding to an operation of the electronic key 3 that is performed by the user in response to receipt of a biometric authentication non-accomplishment notification. The key operation authentication unit 35 is arranged in the verification ECU 4. Examples of key operation authentication include the immobilizer verification, the key switch operation verification performed with the electronic key 3, and the detection of the motion of an operation of the electronic key 3 (operation swinging electronic key 3 as specified). The key operation authentication unit 35 determines whether or not such authentication, which is an alternative function of biometric authentication, has been accomplished.

The biometric-electronic key system 2 includes an actuation permission unit 36 that permits the actuation of the device 32 even if the biometric authentication cannot be accomplished as long as the authentication performed by the key operation authentication unit 35 is accomplished. The actuation permission unit 36 is arranged in the verification ECU 4. For example, the actuation permission unit 36 permits the engine 7 of the vehicle 1 to be started even if the biometric authentication cannot be accomplished as long as the authentication performed by the key operation authentication unit 35 has been accomplished.

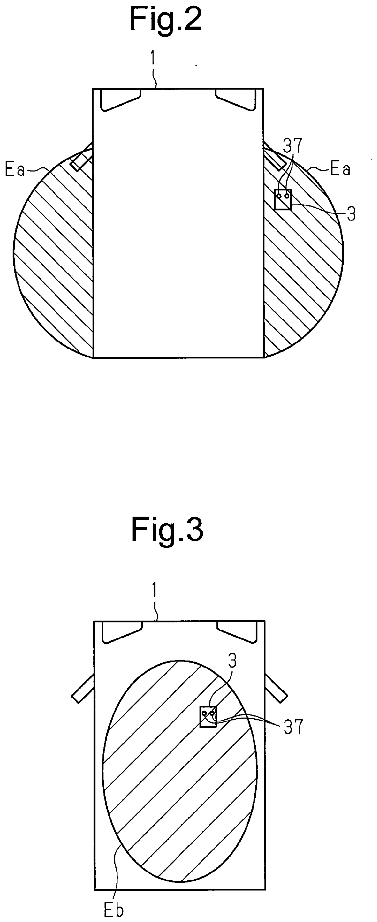

The operation and advantages of the biometric-electronic key system will now be described with reference to Figs. 2 to 6C.

As illustrated in Fig. 2, the exterior transmitter 13 uses LF radio waves to form exterior communication areas Ea around the vehicle 1 (approximately one meter). The example of Fig. 2 illustrates two exterior communication areas Ea located at a driver seat side and a passenger seat side. However, the number and locations of the exterior communication areas may be changed in accordance with the arrangement and the number of the exterior transmitters 13. The exterior transmitter 13 regularly transmits a wake signal in order to search for the electronic key 3. The electronic key 3 replies to a response signal in response to the receipt of the wake signal.

When the electronic key 3 enters the exterior communication area Ea, the establishment of communication (exterior smart communication) between the vehicle 1 and the electronic key 3 starts the smart verification (exterior smart verification). In the exterior smart verification of the present example, a vehicle code verification that authenticates a vehicle code unique to the vehicle 1, a challenge response authentication that uses an encryption key, and an electronic key ID verification that authenticates an electronic key ID are performed. The verification ECU 4 communicates with the electronic key 3 in the exterior communication area Ea and determines that exterior smart verification has been accomplished when the verifications and authentications have all been accomplished. When the verification ECU 4 determines that exterior smart verification has been accomplished, the verification ECU 4 then permits or performs the locking and unlocking of the vehicle door with the body ECU 5.

The vehicle door may be locked or unlocked by, for example, a wireless key system in which ID verification (wireless verification) is executed in response to communication from the electronic key 3. When the wireless key system is used, operation switches 37, which are arranged on the electronic key 3, are used to remotely switch between the locking and unlocking of the vehicle door. The operation switches 37 include an unlocking switch and a locking switch. When the unlocking switch is operated, the electronic key 3 transmits an unlocking request signal on the UHF band. When the radio wave receiver 15 receives the unlocking request signal transmitted from the electronic key 3, the verification ECU 4 verifies an electronic key ID included in the unlocking request signal. When the ID verification is accomplished, the vehicle door is unlocked based on a cancellation command in the unlocking request signal. When the locking switch of the electronic key 3 is operated, the same communication and verification are performed to lock the vehicle door.

As illustrated in Fig. 3, when the verification ECU 4 determines with a door courtesy switch (not illustrated) or the like that the user has entered the vehicle, the verification ECU 4 transmits a wake signal from the interior transmitter 14 instead of the exterior transmitter 13. The interior transmitter 14 forms an interior communication area Eb for the wake signal throughout the passenger compartment. When the electronic key 3 enters the interior communication area Eb, the establishment of communication (interior smart communication) between the vehicle 1 and the electronic key 3 starts a smart verification (interior smart verification). In the interior smart verification of the present example, the verification ECU 4 determines whether or not a vehicle code verification, a challenge response verification, and an electronic ID verification have been accomplished through communication with the electronic key 3 in the passenger compartment.

When the vehicle code verification, challenge response verification, and electronic ID verification have all been accomplished, the verification ECU 4 determines that the interior smart verification has been accomplished. When any one of the vehicle code verification, challenge response verification, and electronic ID verification is not accomplished, the verification ECU 4 determines that the interior smart verification has not been accomplished. In this case, the verification ECU 4 disables the shifting of power of the vehicle 1 when the engine switch 18 is operated.

As illustrated in Fig. 4, when the user who has entered the vehicle starts the engine 7, the user presses the button 19 of the engine switch 18. When the button 19 of the engine switch 18 is pressed, the verification ECU 4 obtains the biometric information Dbi from the sensor 31, which is arranged on the button 19 of the engine switch 18, and executes biometric authentication that verifies the obtained biometric information Dbi. The verification ECU 4 verifies the biometric information Dbi obtained from the sensor 31 by comparing the biometric information Dbi obtained from the sensor 31 with the biometric information registered to the memory 9. When determining that the biometric information Dbi is correct, the verification ECU 4 determines that the biometric authentication has been accomplished.

When the verification ECU 4 determines that the smart verification (interior smart verification) and the biometric authentication have both been accomplished, the verification ECU 4 permits the power of the vehicle 1 to be shifted when the engine switch 18 is operated. This starts the engine 7 when, for example, the engine switch 18 is operated while the brake pedal is depressed.

As illustrated in Fig. 5, under the condition that interior smart verification has been accomplished, when the verification ECU 4 determines that the biometric authentication cannot be accomplished although the biometric information Dbi has been obtained from the sensor 31, the verification ECU 4 performs the alternative authentication instead of biometric authentication. The non-accomplishment notification unit 34a of the vehicle 1 transmits a non-accomplishment notification signal Sr notifying that the biometric authentication has not been accomplished from the interior transmitter 14 to the electronic key 3. When the reception unit 23 receives the non-accomplishment notification signal Sr, the non-accomplishment notification unit 34b of the electronic key 3 presents the user with a biometric authentication non-accomplishment notification.

It is preferred that the biometric authentication non-accomplishment notification be, for example, feedback using sound or vibration generated by the electronic key 3. Sound feedback can be realized by, for example, a buzzer or speaker arranged in the electronic key 3. Vibration feedback can be realized by driving, for example, a vibration element arranged in the electronic key 3. The user will understand that the biometric authentication cannot be accomplished from the non-accomplishment notification transmitted from the electronic key 3.

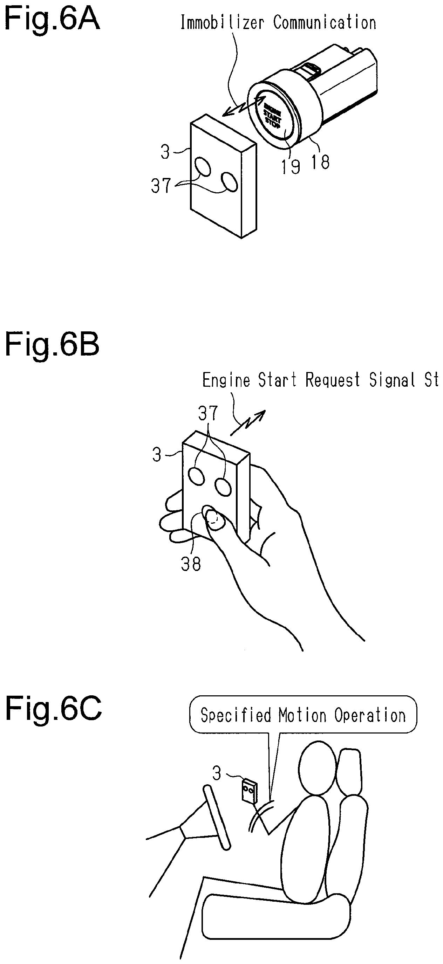

As illustrated in Figs. 6A to 6C, when the user receives a non-accomplishment notification from the electronic key 3, the user requests the system 2 to perform the alternative authentication instead of the biometric authentication. In the present example, the key operation authentication unit 35 executes a key operation authentication corresponding to an electronic key operation performed by the user in response to a biometric authentication non-accomplishment notification. Such key operation authentication includes, for example, immobilizer authentication (refer to Fig. 6A), detection of a key switch operation performed using the electronic key 3 (refer to Fig. 6B), or detection of a motion operation of the electronic key 3 (refer to Fig. 6C).

In the immobilizer verification illustrated in Fig. 6A, when the electronic key 3 is held near the immobilizer antenna 27, the electronic key 3 is verified through near-field wireless communication. In the key switch operation illustrated in Fig. 6B, when a device operation switch (for example, engine start switch 38) that is arranged on the electronic key 3 is pressed, the electronic key 3 transmits a device operation request signal (for example, engine start request signal St) to the vehicle 1 on the UHF band. In the motion operation illustrated in Fig. 6C, when the electronic key 3 is shaken to produce the specified motion, the motion of the electronic key 3 is detected by a motion detector (not illustrated) incorporated in the electronic key 3. The motion detector is, for example, an acceleration sensor.

The key operation authentication unit 35 recognizes an operation of the electronic key 3 performed in any of the above forms and then determines whether or not the key operation authentication has been accomplished. When the key operation authentication is the immobilizer verification (Fig. 6A), the key operation authentication unit 35 determines whether or not electronic key ID verification through the near-field wireless communication has been accomplished. When the key operation authentication is the key switch operation verification (Fig. 6B), the key operation authentication unit 35 verifies the electronic key ID in the engine start request signal St transmitted from the electronic key 3. When the key operation authentication is the motion operation (Fig. 6C), the key operation authentication unit 35 determines whether or not the shaking of the electronic key 3 corresponds to the specified motion registered to the vehicle 1 in advance.

Even if biometric authentication cannot be accomplished, as long as the key operation authentication performed by the key operation authentication unit 35 is accomplished, the actuation permission unit 36 permits the actuation of a device (in the present example, shifting of power of vehicle 1 when operating engine switch 18). Thus, when the user enters the vehicle to start the engine 7, the engine 7 can be started when the alternative authentication is accomplished even if the biometric authentication cannot be accomplished. This avoids situations in which the engine 7 cannot be switched to a start state when biometric authentication is not accomplished.

In the present example, a biometric authentication non-accomplishment notification is presented to the user. This allows the user to know that the biometric authentication has not been accomplished. Even if biometric authentication is not accomplished, accomplishment of the key operation authentication corresponding to a predetermined operation of the electronic key 3 will satisfy the condition that performs or permits actuation of the device 32 (in the present example, condition for stating engine 7). Thus, even if biometric authentication is not accomplished, the actuation of the device 32 can be permitted or performed when the key operation authentication, which is alternative authentication, is accomplished.

Basically, the device 32 is actuated under the condition that the key verification and the biometric authentication are accomplished (start permission condition of engine 7). Thus, even if a relay is used so that communication between the vehicle 1 and the electronic key 3, which is separated from the vehicle 1, is established in an unauthorized manner, the biometric authentication cannot be accomplished. Accordingly, starting of the engine is not permitted. This deters unauthorized communication accomplishment using a relay.

The non-accomplishment notification unit 34 issues notifications indicating non-accomplishment of biometric authentication to the user through the electronic key 3. This allows the user to immediately execute a predetermined operation using the electronic key 3 in response to a biometric authentication non-accomplishment notification that receives feedback from the electronic key 3. Thus, when the biometric authentication is not accomplished, the user can readily switch from the biometric authentication to the key operation authentication, which is the alternative authentication. That is, since a biometric authentication non-accomplishment notification is issued through feedback of the electronic key 3, there is no need for the user to look for the electronic key 3 when the biometric authentication is not accomplished. Thus, the user will be able to perform the required series of actions with the electronic key 3 to perform alternative authentication. This improves convenience for the user.

The key verification of the biometric-electronic key system 2 is the smart verification. Thus, the key verification of the electronic key 3 can be performed without the need for operating the electronic key 3. This improves convenience for the user.

The key operation authentication (authentication corresponding to a predetermined operation of the electronic key 3 performed by the user in response to receipt of a biometric authentication non-accomplishment notification) needs to be accomplished within a certain period from when determining that the biometric authentication cannot be accomplished. Thus, the limited time for the user to operate the electronic key 3 and perform the alternative authentication improves the authentication security.

The actuation permission unit 36 permits starting of the engine 7 of the vehicle 1, which serves as the communication peer 33, even if the biometric authentication is not accomplished as long as the authentication performed by the key operation authentication unit 35 is accomplished. Thus, even if biometric authentication is not accomplished, the engine 7 can be started through alternative authentication using the electronic key 3.

The determination of whether or not to permit locking and unlocking of the vehicle door is performed using key verification such as the smart verification and the wireless verification. Thus, there is no need to perform biometric authentication outside the vehicle which would be technically difficult and result in increased costs.

It should be apparent to those skilled in the art that the foregoing embodiment may be employed in many other specific forms without departing from the scope of the invention. Particularly, it should be understood that the foregoing embodiment may be employed in the following forms.

The method for registering the biometric information Dbi to the vehicle 1 (verification ECU 4) is not particularly limited. For example, a car navigation system in the vehicle may be operated to shift the vehicle 1 to a registration mode so that the biometric information Dbi is registered when the sensor 31 is touched. In any case, various forms may be used to register the biometric information Dbi to the vehicle 1.

The immobilizer antenna 28 of the electronic key 3 may be incorporated in, for example, the transmission unit 24. Further, the reception unit 23 may be changed to a transmission/reception unit having the function of the immobilizer antenna 28.

A biometric authentication non-accomplishment notification does not have to be issued by the electronic key 3 and may be issued by, for example, the vehicle 1.

In the smart verification system, communication areas do not have to be formed separately inside and outside the vehicle to establish communication. For example, the smart verification system may be a system that specifies a key position by measuring the distance to the electronic key 3 with an array antenna. Alternatively, the smart verification system may be a system that determines whether the electronic key 3 is located inside or outside the vehicle by arranging LF antennas at the left and right sides of the vehicle body and verifying a response of the electronic key 3 to radio waves transmitted from each antenna.

The key verification is not limited to the smart verification and may be other verifications.

The biometric authentication is not particularly limited as long as it uses the biometric information Dbi of the user.

Various authentications and verifications performed in key verification (smart verification) are not limited to the examples described in the above embodiment and only need to verify the electronic key 3.

The key operation authentication (authentication corresponding to a predetermined operation of the electronic key 3 performed by the user in response to receipt of a biometric authentication non-accomplishment notification) may be changed to various forms other than the examples described in the above embodiment.

A biometric detector that detects the biometric information Dbi is not limited to the sensor 31 and may be, for example, a camera that captures an image of the user.

The sensor 31 may be changed to a sensor other than the fingerprint sensor. That is, any sensor can be used as long as it can detect the biometric information Dbi of the user.

The sensor 31 does not have to be located on the engine switch 18. The sensor 31 may be located at any position as long as it can detect biometric information of the user.

The communication peer 33 is not limited to the vehicle 1 and may be changed to other devices or apparatuses.

## Claims

1. A biometric-electronic key system (2) comprising:
- an electronic key (3) that is configured to store an electronic key ID;
- a vehicle (1) comprising a verification ECU (4) that is capable of wirelessly communicating with the electronic key (3) and of performing: (i) an interior key verification that verifies the electronic key ID through communication within a passenger compartment and (ii) a biometric authentication that authenticates biometric information of a user, wherein the verification ECU (4) is configured to permit starting of an engine of the vehicle (32) when an engine switch (18) is operated when the interior key verification and the biometric authentication have both been accomplished;
the verification ECU also comprising:
- a non-accomplishment notification unit (34a) that is configured to present the user with a non-accomplishment notification of the biometric authentication when the biometric authentication cannot be accomplished;
- a key operation authentication unit (35) that is configured to execute an alternative authentication corresponding to an electronic key operation performed by the user instead of the biometric authentication in response to the non-accomplishment notification; and
- an actuation permission unit (36) that is configured to permit the actuation of the engine of the vehicle (32) when the biometric authentication cannot be accomplished as long as the alternative authentication performed by the key operation authentication unit (35) has been accomplished;
wherein:
- the alternative authentication corresponding to the electronic key operation includes an immobilizer authentication of the electronic key or a motion operation authentication of the electronic key;
- the immobilizer authentication of the electronic key corresponds to the verification of the electronic key ID through near-field wireless communication;
- the motion operation authentication of the electronic key corresponds to the detection of a specified pre-registered motion of the electronic key;
the biometric-electronic key system (2) also comprising that:
- the engine switch (18) includes a button (19) on which a sensor (31) is arranged to detect the biometric information (Dbi) of the user;
- the engine switch (18) incorporates an immobilizer antenna (27) to perform the immobilizer authentication;
- the electronic key incorporates a motion detector to perform the motion operation authentication;
- when the user presses the button (19) of the engine switch (18), the biometric authentication is executed to verify the biometric information (Dbi) detected by the sensor (31); and
- the actuation permission unit (36) is configured to permit the engine (7) of the vehicle (1) to be started when the biometric authentication cannot be accomplished as long as the alternative authentication performed by the key operation authentication unit (35) has been accomplished.

2. The biometric-electronic key system (2) according to claim 1, wherein the non-accomplishment notification unit (34a) is configured to present the user with the non-accomplishment notification of the biometric authentication through the electronic key (3).

3. The biometric-electronic key system (2) according to claim 1 or 2, wherein the interior key verification is a smart verification in which the electronic key ID is verified when the electronic key (3) transmits the electronic key ID in response to communication from the vehicle (1).

4. The biometric-electronic key system (2) according to any one of claims 1 to 3, wherein the alternative authentication corresponding to the electronic key operation performed by the user in response to receipt of the non-accomplishment notification is required to be accomplished within a certain period from when determining that the biometric authentication cannot be accomplished.

## Patentansprüche

1. Biometrisches elektronisches Schlüsselsystem (2) mit
einem elektronischen Schlüssel (3), der zur Speicherung einer elektronischen Schlüssel-ID eingerichtet ist,
einem Fahrzeug (1) mit einer Verifikations-ECU (4), die zum drahtlosen Kommunizieren mit dem elektronischen Schlüssel (3) und zum Durchführen (i) einer Innenschlüsselverifizierung, die die elektronische Schlüssel-ID über eine Kommunikation mit einem Fahrgastraum verifiziert, und (ii) einer biometrischen Authentifizierung eingerichtet ist, die biometrische Informationen eines Benutzers authentifiziert, wobei die Verifikations-ECU (4) zum Erlauben des Starts eines Motors des Fahrzeugs (32) eingerichtet ist, wenn ein Motorschalter (18) bedient wird, wenn die Innenschlüsselverifizierung und die biometrische Authentifizierung beide bewerkstelligt wurden,
wobei die Verifikations-ECU auch umfasst
eine Nichtbewerkstelligungsmitteilungseinheit (34a), die zum Präsentieren einer Nichtbewerkstelligungsmitteilung der biometrischen Authentifizierung für den Benutzer eingerichtet ist, wenn die biometrische Authentifizierung nicht bewerkstelligt werden kann,
eine Schlüsselbedienungsauthentifizierungseinheit (35), die im Ansprechen auf die Nichtbewerkstelligungsmitteilung zur Ausführung einer alternativen Authentifizierung, die einer elektronischen Schlüsselbedienung entspricht, die durch den Benutzer durchgeführt wird, anstelle der biometrischen Authentifizierung eingerichtet ist, und
eine Betätigungserlaubniseinheit (36), die zum Erlauben der Betätigung des Motors des Fahrzeugs (32) eingerichtet ist, wenn die biometrische Authentifizierung nicht bewerkstelligt werden kann, solange die durch die Schlüsselbedienungsauthentifizierungseinheit (35) durchgeführte alternative Authentifizierung bewerkstelligt wurde,
wobei
die der elektronischen Schlüsselbedienung entsprechende alternative Authentifizierung eine Immobilisierungsauthentifizierung des elektronischen Schlüssels oder eine Bewegungsbedienungsauthentifizierung des elektronischen Schlüssels enthält,
die Immobilitätsauthentifizierung des elektronischen Schlüssels der Verifizierung der elektronischen Schlüssel-ID über eine Nahfelddrahtloskommunikation entspricht,
die Bewegungsbedienungsauthentifizierung des elektronischen Schlüssels der Erfassung einer bestimmten zuvor registrierten Bewegung des elektronischen Schlüssels entspricht,
das biometrische elektronische Schlüsselsystem (2) auch umfasst, dass
der Motorschalter (18) eine Taste (19) enthält, an der ein Sensor (31) zur Erfassung der biometrischen Informationen (Dbi) des Benutzers angeordnet ist,
der Motorschalter (18) eine Immobilisierungsantenne (27) zur Durchführung der Immobilisierungsauthentifizierung enthält,
der elektronische Schlüssel eine Bewegungserfassungseinrichtung zur Durchführung der Bewegungsbedienungsauthentifizierung enthält,
wenn der Benutzer die Taste (19) des Motorschalters (18) drückt, die biometrische Authentifizierung zum Verifizieren der durch den Sensor (31) erfassten biometrischen Informationen (Dbi) ausgeführt wird, und
die Betätigungserlaubniseinheit (36) zum Erlauben des Starts des Motors (7) des Fahrzeugs (1) eingerichtet ist, wenn die biometrische Authentifizierung nicht bewerkstelligt werden kann, solange die durch die Schlüsselbedienungsauthentifizierungseinheit (35) durchgeführte alternative Authentifizierung bewerkstelligt wird.

2. Biometrisches elektronisches Schlüsselsystem (2) nach Anspruch 1, wobei die Nichtbewerkstelligungsmitteilungseinheit (34a) zum Präsentieren der Nichtbewerkstelligungsmitteilung der biometrischen Authentifizierung für den Benutzer über den elektronischen Schlüssel (3) eingerichtet ist.

3. Biometrisches elektronisches Schlüsselsystem (2) nach Anspruch 1 oder 2, wobei die Innenschlüsselverifizierung eine intelligente Verifizierung ist, bei der die elektronische Schlüssel-ID verifiziert wird, wenn der elektronische Schlüssel (3) die elektronische Schlüssel-ID im Ansprechen auf eine Kommunikation von dem Fahrzeug (1) sendet.

4. Biometrisches elektronisches Schlüsselsystem (2) nach einem der Ansprüche 1 bis 3, wobei die alternative Authentifizierung, die der elektronischen Schlüsselbedienung entspricht, die durch den Benutzer im Ansprechen auf einen Empfang der Nichtbewerkstelligungsmitteilung durchgeführt wird, innerhalb eines bestimmten Zeitabschnitts ab der Bestimmung bewerkstelligt werden muss, dass die biometrische Authentifizierung nicht bewerkstelligt werden kann.

## Revendications

1. Système de clé biométrique-électronique (2) comprenant :
- une clé électronique (3) qui est configurée pour stocker un ID (identifiant) de clé électronique ;
- un véhicule (1) comprenant une ECU (unité de commande électronique) de vérification (4) qui est en mesure de communiquer sans fil avec la clé électronique (3) et d'effectuer : (i) une vérification de clé intérieure qui vérifie l'ID de clé électronique par communication à l'intérieur d'un habitacle et (ii) une authentification biométrique qui authentifie des informations biométriques d'un utilisateur, dans lequel l'ECU de vérification (4) est configurée pour permettre le démarrage d'un moteur du véhicule (32) lorsqu'un commutateur de moteur (18) est actionné lorsque la vérification de clé intérieure et l'authentification biométrique ont toutes deux été accomplies ;
l'ECU de vérification comprend également :
- une unité de notification de non-accomplissement (34a) qui est configurée pour présenter à l'utilisateur une notification de non-accomplissement de l'authentification biométrique lorsque l'authentification biométrique ne peut pas être accomplie ;
- une unité d'authentification d'actionnement de clé (35) qui est configurée pour exécuter une authentification de remplacement correspondant à un actionnement de clé électronique effectué par l'utilisateur au lieu de l'authentification biométrique en réponse à la notification de non-accomplissement ; et
- une unité d'autorisation d'activation (36) qui est configurée pour permettre l'activation du moteur du véhicule (32) lorsque l'authentification biométrique ne peut pas être accomplie, à condition que l'authentification de remplacement effectuée par l'unité d'authentification d'actionnement de clé (35) ait été accomplie ;
dans lequel :
l'authentification de remplacement correspondant à l'actionnement de clé électronique comporte une authentification d'immobilisation de la clé électronique ou une authentification d'actionnement de mouvement de la clé électronique ;
- l'authentification d'immobilisation de la clé électronique correspond à la vérification de l'ID de clé électronique par communication sans fil en champ proche ;
- l'authentification d'actionnement de mouvement de la clé électronique correspond à la détection d'un mouvement spécifié préenregistré de la clé électronique ;
le système de clé biométrique-électronique (2) comprenant également les faits suivants :
- le commutateur de moteur (18) comporte un bouton (19) sur lequel est agencé un capteur (31) pour détecter les informations biométriques (Dbi) de l'utilisateur ;
- le commutateur de moteur (18) intègre une antenne d'immobilisation (27) pour effectuer l'authentification d'immobilisation ;
- la clé électronique intègre un détecteur de mouvement pour effectuer l'authentification d'actionnement de mouvement ;
- lorsque l'utilisateur presse le bouton (19) du commutateur de moteur (18), l'authentification biométrique est exécutée pour vérifier les informations biométriques (Dbi) détectées par le capteur (31) ; et
- l'unité d'autorisation d'activation (36) est configurée pour permettre au moteur (7) du véhicule (1) de démarrer lorsque l'authentification biométrique ne peut pas être accomplie, à condition que l'authentification de remplacement effectuée par l'unité d'authentification d'actionnement de clé (35) ait été accomplie.

2. Système de clé biométrique-électronique (2) selon la revendication 1, dans lequel l'unité de notification de non-accomplissement (34a) est configurée pour présenter à l'utilisateur la notification de non-accomplissement de l'authentification biométrique par le biais de la clé électronique (3).

3. Système de clé biométrique-électronique (2) selon la revendication 1 ou 2, dans lequel la vérification de clé intérieure est une vérification intelligente où l'ID de clé électronique est vérifiée lorsque la clé électronique (3) transmet l'ID de clé électronique en réponse à une communication provenant du véhicule (1).

4. Système de clé biométrique-électronique (2) selon l'une quelconque des revendications 1 à 3, dans lequel l'authentification de remplacement correspondant à l'actionnement de clé électronique effectué par l'utilisateur en réponse à la réception de la notification de non-accomplissement doit être accomplie pendant une certaine période à partir du moment où il a été déterminé que l'authentification biométrique ne peut pas être accomplie.
